# FASCICULE DE BREVET EUROPEEN

(11) **EP 0 371 896 B1**
(45) Date de publication et mention de la délivrance du brevet: **09.06.1993**
(21) Numéro de dépôt: 89420473.4
(22) Date de dépôt: 29.11.1989
(51) Int. Cl.: B25H 7/02, B25D 17/28, B23Q 1/14

(54) **Dispositif de marquage par micro-percussion**
Mikroschlaggerät für Markierung
Device for marking by micro-percussion

(30) Priorité: 01.12.1988 FR 8816102
(43) Date de publication de la demande: 06.06.1990
(73) Titulaire: TECHNIFOR Société Anonyme, 01700 Miribel (FR)
(72) Inventeur: Therond, Marcel, FR-69140 Rilieux (FR)
(74) Mandataire: Monnier, Guy

(56) Documents cités:
- EP-A- 0 028 096
- EP-A- 0 047 030
- EP-A- 0 223 214
- CH-A- 655 888
- DE-A- 2 423 424
- DE-C- 222 861
- FR-A- 1 524 085
- FR-A- 2 165 863
- FR-A- 2 539 724
- GB-A- 1 541 732
- US-A- 4 694 912
- IBM TECHNICAL DISCLOSURE BULLETIN, vol. 6, no. 7, 7 décembre 1963, New York, US; H. TIAO: "Random motion lap for cylindrical surface"
- ENGINEERING, no. 196, 6 septembre 1986, 5081, page 296; "Engraving pen - Pneumatically operated"
- BLAST FURNACE AND STEEL PLANT, vol. 51, no. 7, julliet 1963, page 602; "Marker for blooms and billets"

## Description

L'invention concerne un dispositif de marquage d'objets au moyen de la pointe vibrante d'un outil pneumatique comme décrit dans le préambule de la revendication 1.

Un dispositif tel que décrit dans le préambule de la revendication 1 est connu dans l'art antérieur par le document DE-A-2423424.

On connaît déjà des dispositifs de marquage dans lesquels la pointe de l'outil pneumatique est actionnée par un gaz comprimé tel que de l'air. Elle se déplace de façon cyclique suivant son axe, en direction de la surface de l'objet à marquer qu'elle vient frapper après une course de quelques millimètres, puis retourne à sa position initiale. Chaque impact entraîne une légère déformation plastique de la surface de l'objet. Des moyens de guidage connus permettent de déplacer la pointe au voisinage de la surface de l'objet à marquer sans interrompre le fonctionnement cyclique de la pointe à fréquence relativement élevée. C'est ainsi que la pointe vibrante peut tracer par micro-percussion, moyennent son déplacement suivant deux axes perpendiculaires, parallèles au plan de la surface de l'objet, des signes d'identification tels que des lettres, des chiffres ou d'autres motifs.

On connaît également des dispositifs permettant de guider l'outil pneumatique pour effectuer un tel marquage par micro-percussion. Ils comprennent deux chariots qui se déplacent dans des directions perpendiculaires, entraînés chacun par un moteur, lui-même commandé par des moyens électroniques classiques. Souvent, l'un des deux moteurs est monté sur l'un des deux chariots, ce qui complique son alimentation électrique. Les deux chariots doivent être guidés individuellement avec une grande précision si on veut pouvoir obtenir des tracés suffisamment précis des signes d'identification par la pointe vibrante.

Le document DE-A-2 423 424 montre un dispositif de marquage à micro-percussion du genre en question qui comprend d'une part un premier moteur qui permet, par l'intermédiaire d'un premier moyen de transmission, de déplacer, grâce à un premier moyen de guidage, l'outil pneumatique suivant un axe de translation orienté parallèlement au plan de marquage, d'autre part un second moteur associé à un second moyen de transmission afin de faire tourner ledit outil autour de l'axe de translation dans un plan perpendiculaire à celui-ci et de déplacer ainsi les points d'impact de la pointe vibrante sur le plan de marquage précité dans une direction perpendiculaire à la direction de translation.

L'invention a pour but de réaliser un dispositif de marquage par micro-percussion qui ne comporte pas une structure à double chariot, tout en permettant le guidage d'un outil pneumatique à pointe vibrante avec une grande précision, de façon à tracer par micro-percussion, sur le plan de marquage d'un objet, des signes d'identification à deux dimensions. On a également recherché à éviter de monter sur un chariot mobile un moteur d'entraînement afin de simplifier et d'alléger la structure mobile qui entraîne l'outil pneumatique à pointe vibrante.

Le dispositif qui fait l'objet de l'invention apporte une solution particulièrement efficace au problème posé. Il est défini à la revendication 1.

De préférence, l'ouverture angulaire de l'arc de cercle qui peut être parcouru par la pointe vibrante pour atteindre toute l'étendue de la zone de marquage est inférieure à 30° et le rayon R est supérieur à deux fois cette étendue de la zone de marquage.

De préférence également, le premier moyen de transmission est une courroie crantée ou chaîne, disposée parallèlement à l'axe de translation, entraînée par un pignon relié au premier moyen moteur et solidarisée en un point, de façon directe ou indirecte, avec l'outil pneumatique.

De préférence également, l'axe de rotation de l'outil pneumatique est confondu avec l'axe de l'arbre sur lequel le chariot qui le porte est monté coulissant.

Le deuxième moyen de transmission peut être constitué par une bielle reliée au deuxième moyen moteur par une manivelle qui entraîne, par un moyen de liaison appropriée, l'outil pneumatique autour de son axe de rotation, de façon à déplacer la pointe vibrante à l'intérieur de l'arc de cercle correspondant à l'étendue de la zone de marquage. En variante, on peut avoir recours à un système de transmission du type à poulies et courroie qui assure la même fonction que l'ensemble bielle-manivelle tout en permettant une course angulaire plus importante pour faciliter le remplacement du stylet de marquage.

De façon avantageuse également, la courroie crantée ou chaîne est reliée à l'outil pneumatique par l'intermédiaire d'une pièce comportant un alésage de révolution, montée libre en rotation sur l'arbre qui assure le guidage en translation de cet outil pneumatique, les deux faces latérales de cette pièce alésée étant séparées par un faible jeu des parois latérales solidaires de l'outil pneumatique ; la liaison entre la pièce alésée et la courroie crantée ou la chaîne est assurée par une tige de liaison. De façon avantageuse, les parois latérales solidaires de l'outil pneumatique contre lesquelles s'appuie la pièce alésée sont les parois latérales d'une échancrure ménagée dans le chariot porte-outil pour le logement de cette pièce alésée entre deux portées de ce chariot sur l'arbre de guidage.

Le dessin annexé décrit, de façon non limitative, un mode particulier de réalisation du dispositif suivant l'invention.

La fig. 1 est une vue en élévation de ce dispositif suivant la flèche F1 de la fig. 2.

La fig. 2 est une vue en élévation du dispositif de la fig. 1 suivant la flèche F2 de cette fig. 1.

La fig. 3 est une coupe du dispositif de la fig. 2 suivant le plan A-A.

La fig. 4 est une coupe du dispositif de la fig. 2 suivant le plan B-B.

La fig. 5 est une vue en élévation analogue à celle suivant la fig. 2, mais correspondant à une variante de mise en oeuvre.

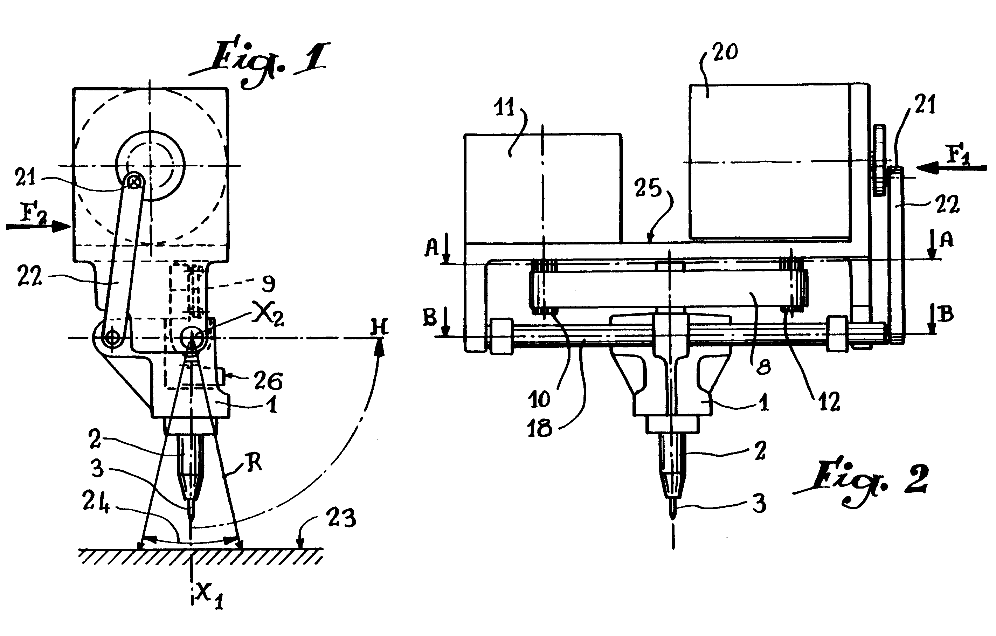

Le dispositif représenté en fig. 1 à 4 comporte un chariot 1 auquel est fixé un outil pneumatique 2 muni d'une pointe vibrante 3 apte à se déplacer suivant son axe X 1 d'un mouvement cyclique aller-retour sous l'action d'un gaz comprimé tel que de l'air. Le chariot 1 est monté coulissant sur l'arbre 4 qui constitue son moyen de guidage suivant l'axe de translation X2 - X2, grâce à deux portées 5, 6 entre lesquelles une pièce alésée 7 est montée libre en rotation sur l'arbre, ses faces latérales annulaires de révolution étant séparées par un faible jeu 7A des faces latérales correspondantes des portées 5, 6 ; le faible jeu tel que 7A permet la libre rotation des portées par rapport à la pièce alésée 7 qui est reliée à la courroie crantée 8 par une tige de liaison 9. La courroie crantée 8, premier moyen de transmission, est tendue parallèlement à l'axe X2-X2 entre le pignon 10 du premier moyen moteur 11 et une poulie de renvoi 12. La tige de liaison 9 est accrochée à la courroie 8 par une patte de serrage 13 de façon connue. L'arbre 4, libre en rotation dans des portées 14, 15, à ses deux extrémités, est relié par deux biellettes 16, 17 parallèles bloquées en rotation par rapport à cet arbre 4 et également par rapport à l'arbre secondaire 18 parallèle à l'arbre 4. Sur cet arbre secondaire vient prendre appui, par une portée coulissante 19, le chariot 1.

Le deuxième moyen moteur, par l'intermédiaire du deuxième moyen de transmission, provoque la rotation du chariot 1 autour de X2 - X2. Comme on le voit sur les figures, ce deuxième moyen de transmission comprend une manivelle 21, entraînée par le deuxième moyen moteur 20, qui entraîne une bielle 22 reliée à l'arbre secondaire 18 qu'elle fait tourner autour de l'arbre 4 en entraînant la rotation du chariot 1. On remarque que quelle que soit la position du chariot 1 le long de l'arbre 4, un même déplacement de la bielle 22 entraîne une rotation de ce chariot 1 d'un même angle et donc un même déplacement angulaire de la pointe vibrante 3.

Comme le montre la fig. 1, l'étendue de la zone de marquage de la pointe vibrante 3 sur le plan de marquage 23 d'un objet correspond à un arc de cercle 24 d'environ 20°. On remarque que le rayon R du cercle d'axe X2 - X2 tangent au plan de marquage d'un objet, la pointe vibrante 3 étant en position de travail, par rapport à ce plan 23 est égale à environ 3 fois l'étendue de cette zone de marquage correspondant à cet arc de cercle de 20°. On constate que, dans ces conditions, la course de la pointe vibrante n'est majorée que d'une longueur de l'arbre de 1,5 % du rayon R aux deux extrémités de cet arc de cercle, écartées seulement de 10° par rapport à l'axe vertical X1. Dans la pratique, on constate que la faible variation de course de la pointe vibrante avant l'impact, et le faible écart par rapport à la verticale n'entraînent pas de variations appréciables des effets de l'impact. Le tracé conserve la netteté nécessaire pour la réalisation des signes d'identification.

Il convient de noter, par ailleurs, que les deux moyens moteurs 11, 20 sont des moteurs pas à pas, commandés par impulsions à partir de moyens électroniques générateurs d'impulsions, non représentés et bien connus de l'homme de métier. Ces deux moteurs sont montés sur une platine 25 fixe par rapport au chariot 1. L'inertie de celui-ci est donc réduite au minimum et sa seule liaison avec une source d'énergie est un tuyau souple, non représenté, pour son alimentation en un gaz comprimé tel que de l'air ; le tuyau souple est relié à l'orifice 26 de l'outil pneumatique.

Le mode de réalisation du dispositif suivant l'invention peut faire l'objet de nombreuses variantes ou adaptations. En particulier, les moyens de transmission entre les moteurs et les mécanismes qu'ils commandent peuvent subir de nombreuses modifications. Ainsi, la courroie crantée 8 peut être remplacée par une chaîne. De même, la transmission par bielle 22 et manivelle 21 du couple du deuxième moyen 20 moteur pourrait être remplacée par un entraînement direct de l'arbre 4, le moteur étant placé en bout d'arbre avec un rapport de réduction adapté.

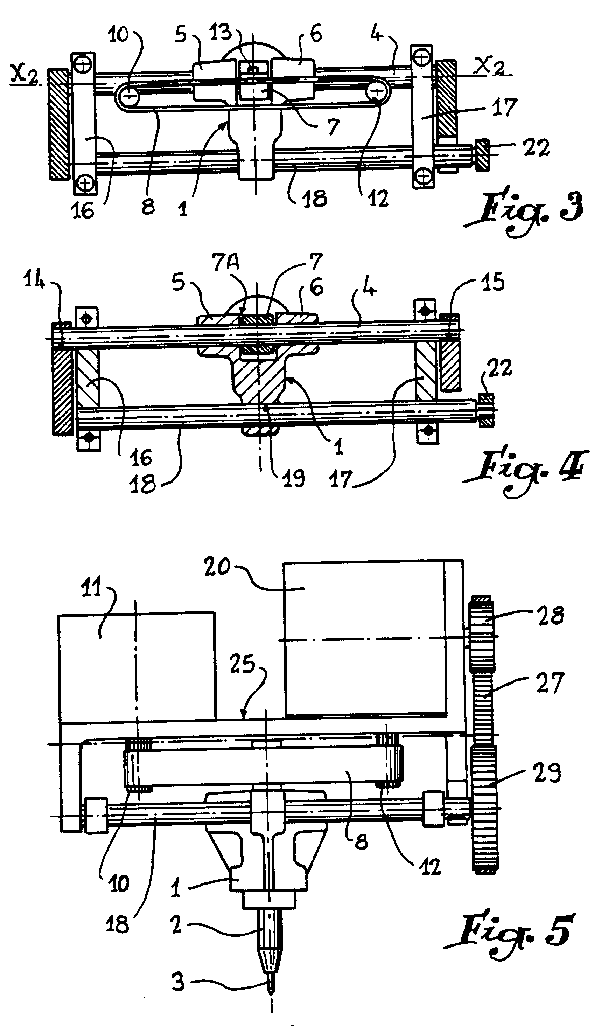

On peut également adopter la variante de réalisation illustrée à la fig. 5 où le système bielle-manivelle 21-22 est remplacé par une courroie 27 tendue entre deux poulies dont l'une 28 est calée sur l'arbre du moteur 20 tandis que l'autre 29 est solidaire de l'arbre secondaire 18. On obtient de la sorte le déplacement angulaire de la pointe ou stylet 3 et de plus on peut, pour faciliter le remplacement de celle-ci, relever l'ensemble jusqu'à la position indiquée en H à la fig. 1.

## Revendications

1. Dispositif de marquage par micro-percussion au moyen d'un outil pneumatique (2) équipé d'une pointe vibrante (3) apte à tracer sur le plan de marquage d'un objet, par déformation plastique, des signes d'identification à deux dimensions, lequel outil pneumatique est déplacé, sous l'effet de moyens électroniques de commande, d'une part par un premier moyen moteur (11) qui grâce à un premier moyen de guidage (4) permet, par l'intermédiaire d'un premier moyen de transmission (8), la translation dudit outil suivant un premier axe (X2-X2) parallèle au plan de marquage (23), d'autre part par un second moyen moteur (20) relié par un second moyen de transmission (22) à l'outil (2) en vue de le faire tourner autour de l'axe de translation (X2-X2) précité dans un plan perpendiculaire à ce dernier et de déplacer ainsi les points d'impact de la pointe vibrante (3) sur le plan de marquage (23) dans une direction perpendiculaire à la direction de translation, caractérisé en ce que :
- le rayon (R) du cercle tangent au plan de marquage (23) de l'objet ayant pour centre l'axe de translation (X2-X2) de l'outil (2) en position de travail, est supérieur à 1,5 fois l'étendue de la zone de marquage (24);
- le premier moyen de guidage est constitué par un arbre (4) sur lequel coulisse suivant l'axe de translation (X2-X2) et tourne dans un plan perpendiculaire à celui-ci un chariot (1) formant support pour l'outil ;
- le premier moyen de transmission (8) est relié audit chariot (1) par l'intermédiaire d'une pièce alésée (7) montée libre en rotation sur l'arbre (4) précité afin d'assurer le déplacement axial du chariot ;
- l'arbre (4) susmentionné est libre en rotation dans des portées (14, 15) associées à ses extrémités et est relié à un arbre secondaire (18) par deux biellettes parallèles (16, 17) bloquées en rotation par rapport audit arbre secondaire (18) et à l'arbre (4), lesdits arbres (18 et 4) étant orientés parallèlement l'un à l'autre ;
- et le chariot (1) prend appui sur l'arbre secondaire (18) par une portée coulissante (19).

2. Dispositif suivant la revendication 1, caractérisé en ce qu'en vue de limiter à moins de 30° l'ouverture angulaire (24) de l'arc de cercle parcouru par la pointe vibrante (3) au cours du marquage, la longueur du rayon (R) du cercle tangent au plan de marquage (23) ayant pour centre l'axe de translation (X2-X2) de l'outil (2) en position de travail, est supérieur à deux fois l'étendue de la zone de marquage (24).

3. Dispositif suivant l'une quelconque des revendications 1 et 2, caractérisé en ce que le premier moyen de transmission (8) est une courroie crantée ou chaîne (8) disposée parallèlement à l'axe de translation (X2-X2), entraînée par un pignon (10) relié au premier moyen moteur (11) et solidarisée en un point, de façon directe ou indirecte, avec l'outil pneumatique (2).

4. Dispositif suivant l'une quelconque des revendications 1 à 3, caractérisé en ce que l'axe de rotation de l'outil pneumatique (2) est confondu avec l'axe (X2-X2) de l'arbre (4) sur lequel le chariot (1) qui le porte est monté coulissant.

5. Dispositif suivant l'une quelconque des revendications 1 à 4, caractérisé en ce que le deuxième moyen de transmission est une bielle (22) reliée au deuxième moyen moteur (20) par une manivelle (21) qui entraîne, par un moyen de liaison approprié, l'outil (2) autour de son axe de rotation, afin de déplacer la pointe vibrante (3) à l'intérieur de l'arc de cercle (24) correspondant à l'étendue de la zone de marquage.

6. Dispositif suivant l'une quelconque des revendications 1 à 4, caractérisé en ce que le deuxième moyen moteur (20) entraîne directement en rotation l'arbre (4), autour de l'axe duquel l'outil pneumatique (2) est monté en rotation.

7. Dispositif suivant l'une quelconque des revendications 1 à 4, caractérisé en ce que le deuxième moyen moteur comprend une courroie (27) tendue entre deux poulies dont l'une (28) est calée sur l'arbre du moteur (20) tandis que l'autre (29) est solidaire de l'arbre (4), de façon à ce que lorsque désiré ce deuxième moyen moteur permette le relèvement de la pointe (3) jusqu'à l'horizontale en facilitant de la sorte le remplacement de ladite pointe.

8. Dispositif suivant l'une des revendications 3 à 6, caractérisé en ce que les deux faces latérales de la pièce alésée (7) reliée au premier moyen de transmission (8) sont séparées par un faible jeu (7A) des parois latérales solidaires de l'outil (2).

9. Dispositif suivant la revendication 8, caractérisé en ce que la liaison entre la pièce alésée (7) et la courroie crantée (8) ou la chaîne est assurée par une tige de liaison (9).

10. Dispositif suivant les revendications 8 ou 9, caractérisé en ce que les parois latérales solidaires de l'outil (2) contre lesquelles s'appuie la pièce alésée (7) sont les parois latérales d'une échancrure ménagée dans le chariot (1) pour le logement de cette pièce alésée entre deux portées (5, 6) de ce chariot sur l'arbre (4).

## Patentansprüche

1. Mikroschlaggerät für Markierung mittels einer pneumatischen Vorrichtung (2), welche mit einer schwingenden Spitze (3) versehen ist, die dazu dient, zweidimensionale Kennzeichen auf der Markierungsebene eines Objektes durch plastische Verformung aufzuzeichnen, wobei die pneumatische Vorrichtung mit Hilfe elektronischer Steuermittel einerseits durch ein erstes Antriebsmittel (11), das dank eines ersten Führungsmittels (4) mit Hilfe eines ersten Übertragungsmittels (8) eine Verschiebung der besagten Vorrichtung entlang einer zur Markierungsebene (23) parallelen ersten Achse (X2-X2) gestattet, andererseits durch ein zweites Antriebsmittel (20) verschoben wird, das durch ein zweites Übertragungsmittel (22) an der Vorrichtung (2) befestigt ist, um dieses um die vorerwähnte Translationsachse (X2-X2) in einer dazu senkrechten Ebene zu drehen und dadurch die Auftreffpunkte der schwingenden Spitze (3) auf der Markierungsebene (23) in einer zur Translationsrichtung senkrechten Richtung zu verschieben, dadurch gekennzeichnet, daß
- der Radius (R) des die Markierungsebene (23) des Objektes tangierenden Kreises, der in der Arbeitsstellung die Translationsachse (X2-X2) der Vorrichtung (2) zum Mittelpunkt hat, 1,5 mal gröber als die Ausdehnung der Markierungszone (24) ist;
- das erste Führungsmittel aus einer Welle (4) besteht, auf welcher ein einen Träger für die Vorrichtung bildender Schlitten (1) entlang der Translationsachse (X2-X2) verschiebbar und in einer dazu senkrechten Ebene drehbar ist;
- das erste Übertragungsmittel (8) an dem Schlitten (1) mittels eines aufgebohrten Teils (7) befestigt ist, das frei drehbar an der vorgenannten Welle (4) angebracht ist, um die axiale Verschiebung des Schlittens sicherzustellen;
- die vorerwähnte Welle (4) in mit ihren Enden verbundenen Lagerflächen (14, 15) frei drehbar und durch zwei parallele Schwingarme (16, 17) an einer zweiten Welle (18) befestigt ist, wobei die Schwingarme drehfest auf der zweiten Welle (18) und der Welle (4) sitzen, und die Wellen (18 und 4) parallel zueinander ausgerichtet sind; und
- der Schlitten (1) durch eine Gleitlagerfläche (19) auf der zweiten Welle (18) abgestützt ist.

2. Gerät nach Anspruch 1, dadurch gekennzeichnet, daß im Hinblick auf ein Begrenzen der Winkelöffnung (24) des die schwingende Spitze (3) im Verlauf der Markierung durchlaufenden Kreisbogens auf unter 30° die Länge des Radius (R) des die Markierungsebene (23) tangierenden Bogens, welcher in der Arbeitsstellung die Translationsachse (X2-X2) der Vorrichtung (2) zum Zentrum hat, mehr als zweimal so grob ist wie die Abmessung der Markierungszone (24).

3. Gerät nach einem der Ansprüche 1 und 2, dadurch gekennzeichnet, daß das erste Übertragungsmittel (8) ein parallel zur Translationsachse (X2-X2) angeordneter Zahnriemen oder eine Kette (8) ist, welcher bzw. welche durch ein an dem ersten Antriebsmittel (11) befestigtes Ritzel (10) angetrieben wird und in einem Punkt direkt oder indirekt mit der pneumatischen Vorrichtung (2) verbunden ist.

4. Gerät nach einem der Ansprüche 1 bis 3, dadurch gekennzeichnet, daß die Drehachse der pneumatischen Vorrichtung (2) mit der Achse (X2-X2) der Welle (4) zusammenfällt, auf der der die Vorrichtung tragende Schlitten (1) verschiebbar angebracht ist.

5. Gerät nach einem der Ansprüche 1 bis 4, dadurch gekennzeichnet, daß das zweite Übertragungsmittel ein Zwischenglied (22) ist, das durch eine Kurbel (21) an dem zweiten Antriebsmittel (20) befestigt ist, welches die Vorrichtung (2) durch ein geeignetes Verbindungsmittel um seine Drehachse mitnimmt, um die schwingende Spitze (3) im Innenraum des der Ausdehnung der Markierungszone entsprechenden Kreisbogens (24) zu verschieben.

6. Gerät nach einem der Ansprüche 1 bis 4, dadurch gekennzeichnet, daß das zweite Antriebsmittel (20) die Welle (4) direkt in Drehung versetzt, um dessen Achse herum die pneumatische Vorrichtung (2) drehbar angebracht ist.

7. Gerät nach einem der Ansprüche 1 bis 4, dadurch gekennzeichnet, daß das zweite Antriebsmittel einen von zwei Rollen gespannten Riemen (27) aufweist, von denen eine (28) auf der Welle des Motors (20) verklemmt ist, während die andere (29) fest mit der Welle (4) verbunden ist, so daß dieses zweite Antriebsmittel, falls gewünscht, ein Anheben der Spitze (3) bis zur Horizontalen gestattet, um dadurch ein Auswechseln der Spitze zu ermöglichen.

8. Gerät nach einem der Ansprüche 3 bis 6, dadurch gekennzeichnet, daß die zwei Seitenflächen des an dem ersten Übertragungsmittel (8) befestigten aufgebohrten Teils (7) durch ein geringes Spiel (7A) von den miteinander verbundenen Seitenwänden der Vorrichtung (2) getrennt sind.

9. Gerät nach Anspruch 8, dadurch gekennzeichnet, daß die Verbindung zwischen dem aufgebohrten Teil (7) und dem Zahnriemen (8) oder der Kette durch eine Verbindungsstange (9) sichergestellt ist.

10. Gerät nach Anspruch 8 oder 9, dadurch gekennzeichnet, daß die miteinander verbundenen Seitenwinde der Vorrichtung (2), gegen die sich das aufgebohrte Teil (7) abstützt, die Seitenwände eines in dem Schlitten (1) ausgesparten Ausschnitts zum Lagern dieses aufgebohrten Teils zwischen zwei Lagerflächen (5, 6) des Schlittens auf der Welle (4) sind.

## Claims

1. Micro-percussion marking device, utilising a pneumatic instrument (2) provided with a vibrating point (3) suitable for tracing on the marking plane of an object, by plastic deformation, two-dimensional identification marks, such pneumatic instrument being displaced, by electronic control means, on the one hand by a first motor means (11) which, due to a first guide means (4), permits, via the intermediary of a first transmission means (8), said instrument to travel along a first axis (X2-X2) parallel to the marking plane (23), on the other hand by a second motor means (20) connected by a second transmission means (22) to the instrument (2) so as to cause it to rotate about the above-mentioned travel axis (X2-X2) in a plane perpendicular to the latter and to displace thereby the points of impact of the vibrating point (3) on the marking plane (23) in a direction perpendicular to the direction of travel, characterised in that:
- the radius (R) of the circle tangential to the marking plane (23) of the object, having for its centre the travel axis (X2-X2) of the instrument (2) in its operational position, is greater than 1.5 times the dimension of the marking area (24);
- the first guide means is formed by a shaft (4) on which a carriage (1) slides, according to the travel axis (X2-X2), and rotates, in a perpendicular plane to the latter, such carriage providing support for the instrument;
- the first transmission means (8) is connected to said carriage (1) via the intermediary of a bored component (7) freely rotatably mounted on the above-mentioned shaft (4) in order to ensure the axial displacement of the carriage;
- the above-mentioned shaft (4) is freely rotatable in bearings (14, 15) associated with its ends and is connected to a secondary shaft (18) by two parallel connecting bars (16, 17) rotatably blocked in relation to said secondary shaft (18) and the shaft (4), said shafts (18 and 4) being orientated parallel to each other;
- and the carriage (1) is supported on the secondary shaft (18) by a sliding bearing (19).

2. Device according to claim 1, characterised in that, so as to limit to less than 30° the angular opening (24) of the arc of the circle covered by the vibrating point (3) during the marking operation, the length of the radius (R) of the circle tangential to the marking plane (23), having for its centre the travel axis (X2-X2) of the instrument (2) in its operational position, is greater than twice the dimension of the marking area (24).

3. Device according to any of claims 1 and 2, characterised in that the first transmission means (8) is a notched belt or chain (8) disposed parallel to the travel axis (X2-X2), driven by a cogwheel (10) connected to the first motor means (11) and made integral at one point, by direct or indirect means, with the pneumatic instrument (2).

4. Device according to any of claims 1 to 3, characterised in that the axis of rotation of the pneumatic instrument (2) is identical with the axis (X2-X2) of the shaft (4) on which the carriage (1) which carries it is mounted in sliding manner.

5. Device according to any of claims 1 to 4, characterised in that the second transmission means is a rod (22) connected to the second motor means (20) by a crank (21) which drives, by an appropriate connection means, the instrument (2) around its axis of rotation, in order to displace the vibrating point (3) inside the arc of the circle (24) corresponding to the dimension of the marking area.

6. Device according to any of claims 1 to 4, characterised in that the second motor means (20) directly sets the shaft (4) in rotation, the pneumatic instrument (2) being mounted so as to rotate about the axis of said shaft.

7. Device according to any of claims 1 to 4, characterised in that the second motor means comprises a belt (27) stretched between two pulleys, one of which (28) is jammed on the shaft of the motor (20) while the other (29) is integral with the shaft (4), so that, when desired, this second motor means permits the raising of the point (3) to the horizontal, thereby facilitating the replacement of said point.

8. Device according to one of claims 3 to 6, characterised in that the two lateral faces of the bored component (7), connected to the first transmission means (8), are separated by a small gap (7A) from the lateral walls integral with the instrument (2).

9. Device according to claim 8, characterised in that the connection between the bored component (7) and the notched belt (8) or the chain is ensured by a connecting spindle (9).

10. Device according to claims 8 or 9, characterised in that the lateral walls, integral with the instrument (2) against which the bored component (7) is supported, are the lateral walls of an opening provided in the carriage (1) for the accommodation of this bored component between two bearings (5, 6) of this carriage on the shaft (4).
